# EUROPÄISCHE PATENTANMELDUNG

(11) **EP 3 839 444 A1**
(43) Veröffentlichungstag der Anmeldung: **23.06.2021**
(21) Anmeldenummer: 20210551.6
(22) Anmeldetag: 30.11.2020
(51) Int. Cl.: G01D 11/30, G01N 27/28

(54) **INTELLIGENTE SICHERHEITSARMATUR MIT SCHLIESSEINHEIT UND SENSORBAUGRUPPE UND STEUERVERFAHREN EINER INTELLIGENTEN SICHERHEITSARMATUR**

(30) Priorität: 20.12.2019 DE 102019135598
(71) Anmelder: Endress + Hauser Conducta GmbH+Co. KG, 70839 Gerlingen (DE)
(72) Erfinder: Jagiella, Manfred, 73274 Notzingen (DE); Wittmer, Detlev, 75433 Maulbronn (DE)
(74) Vertreter: Andres, Angelika Maria

(57) **Zusammenfassung**

Intelligente Sicherheitsarmatur (1) umfassend:
- ein Armaturgehäuse (10), mit einem ersten Armatureingang (11), einem Armaturausgang (12) und einem ersten Sensorkompartment (13), wobei das erste Sensorkompartment (13) eine erste Sensorbaugruppe (2) beinhaltet, wobei das erste Sensorkompartment (13) im Armaturgehäuse (10) angeordnet ist,
- eine erste Schließeinheit (15), welche dazu geeignet ist, die intelligente Sicherheitsarmatur (1) zu verschließen,
- eine Stelleinheit (16), welche mit der ersten Schließeinheit (15) mechanisch verbunden ist, um die erste Schließeinheit (15) zu verschließen,
- eine Steuereinheit (17), welche mit der Stelleinheit (16) verbunden ist und dazu geeignet ist, die Stelleinheit (16) zu steuern,
wobei die Steuereinheit (17) mit der ersten Sensorbaugruppe (2) verbunden ist, um Messwertsätze der ersten Sensorbaugruppe (2) auszuwerten,
wobei die erste Sensorbaugruppe (2) mindestens einen Analysesensor, beispielsweise einen pH-Sensor, einen Leitfähigkeitssensor oder einen Sauerstoffsensor umfasst.

## Beschreibung

Die Erfindung betrifft eine intelligente Sicherheitsarmatur und ein Steuerverfahren einer intelligenten Sicherheitsarmatur.

In der Analysemesstechnik, insbesondere im Bereich der Wasserwirtschaft, der Umweltanalytik, im industriellen Bereich, z.B. in der Lebensmitteltechnik, der Biotechnologie und der Pharmazie, sowie für verschiedenste Laboranwendungen sind Messgrößen wie der pH-Wert, die Leitfähigkeit, oder auch die Konzentration von Analyten, wie beispielsweise Ionen oder gelösten Gasen in einem gasförmigen oder flüssigen Messmedium von großer Bedeutung. Diese Messgrößen können beispielsweise mittels elektrochemischer Sensoren erfasst und/oder überwacht werden, wie zum Beispiel potentiometrische, amperometrische, voltammetrische oder coulometrische Sensoren, oder auch Leitfähigkeitssensoren.

Zum Ermitteln der Messgrößen wird der Sensor über eine Sensoröffnung in zum Beispiel einem Prozesskessel oder einer Prozessleitung mit dem Messmedium in Kontakt gebracht. Diese Sensoröffnungen sind über zum Beispiel eine Flanschverbindung mit zum Beispiel einem Rohr einer Prozessleitung, einer Armatur zum Verändern und Steuern von Stoffströmen oder anderen Prozessbauteilen verbunden.

Ein Nachteil derartigen Sensoröffnungen ist, dass diese meist eine sehr komplizierte Form aufweisen und zur Einbringung in zum Beispiel eine Prozessleitung, die Prozessleitung aufgetrennt werden muss und anschließend wieder sicher mit der Sensoröffnung verbunden werden muss. Somit ist die Verwendung einer Vielzahl an Sensoren mit hohen Fertigungskosten für die entsprechenden Sensoröffnungen verbunden. Ebenso steigt mit der Verwendung einer Vielzahl an Sensoröffnungen die Anzahl an möglichen Fehlerquellen für Leckagen in zum Beispiel Prozessleitungen.

Es ist daher eine Aufgabe der Erfindung, eine Vorrichtung bereitzustellen, welche es ermöglicht, die Anzahl an Sensoröffnungen zu minimieren.

Diese Aufgabe wird erfindungsgemäß gelöst durch eine intelligente Sicherheitsarmatur gemäß Anspruch 1.

Die erfindungsgemäße Intelligente Sicherheitsarmatur umfasst:
- ein Armaturgehäuse, mit einem ersten Armatureingang, einem Armaturausgang und einem ersten Sensorkompartment, wobei das erste Sensorkompartment eine erste Sensorbaugruppe beinhaltet, wobei das erste Sensorkompartment im Armaturgehäuse angeordnet ist,
- eine erste Schließeinheit, welche dazu geeignet ist, die intelligente Sicherheitsarmatur zu verschließen,
- eine Stelleinheit, welche mit der ersten Schließeinheit mechanisch verbunden ist, um die erste Schließeinheit zu verschließen,
- eine Steuereinheit, welche mit der Stelleinheit verbunden ist und dazu geeignet ist, die Stelleinheit zu steuern.

Die Steuereinheit ist mit der ersten Sensorbaugruppe verbunden, um Messwertsätze der ersten Sensorbaugruppe auszuwerten. Die erste Sensorbaugruppe umfasst mindestens einen Analysesensor, beispielsweise einen pH-Sensor, einen Leitfähigkeitssensor, einen Sauerstoffsensor oder einen optischen Sensor.

Anhand der erfindungsgemäßen intelligenten Sicherheitsarmatur wird ermöglicht die Anzahl der notwendigen Sensoröffnungen in einer Prozessanlage zu minimieren, da vorhandene Verbindungsstellen mit Armaturen zum Verändern und Steuern von Stoffströmen nun auch zur Messwerterfassung verwendet werden können. Somit werden die Verbindungsstellen in einer Prozessleitung oder einem Prozesskreislauf reduziert und damit potentielle Stellen einer Leckage reduziert. Die Verwendung einer intelligenten Sicherheitsarmatur erlaubt zudem die Anzahl an komplexen Bauteilen zu reduzieren bzw. zu konzentrieren. Dadurch wird die Wartung einer Prozessanlage vereinfacht, da die Anzahl an Kontrollpunkten reduziert wird.

Gemäß einer Ausführungsform der Erfindung weist die Steuereinheit ein Kommunikationsmodul auf und ist dazu geeignet, mit einem zur intelligenten Sicherheitsarmatur externen System zu kommunizieren.

Gemäß einer Ausführungsform der Erfindung ist das Kommunikationsmodul eine Feldbus-Schnittstelle, eine Netzwerk-Schnittstelle, oder eine drahtlose Schnittstelle.

Gemäß einer Ausführungsform der Erfindung weist das Armaturgehäuse einen zweiten Armatureingang auf. Die erste Schließeinheit ist dazu geeignet, ein vorbestimmtes Verhältnis der Öffnungen zwischen dem ersten Armatureingang und dem zweiten Armatureingang einzustellen. Gemäß einer Ausführungsform der Erfindung weist das Armaturgehäuse ein zweites Sensorkompartment auf. Das erste Sensorkompartment ist bei dem Armaturausgang angeordnet und das zweite Sensorkompartment ist bei dem ersten Armatureingang oder dem zweiten Armatureingang angeordnet.

Gemäß einer Ausführungsform der Erfindung weist der Analysesensor ein ionensensitives Element auf. Das ionensensitive Element ist auf einem Substrat angebracht. Das Substrat umfasst vorzugsweise Email, Keramik, Kunststoff oder Metall.

Die oben genannte Aufgabe wird erfindungsgemäß ebenfalls gelöst durch ein Steuerverfahren gemäß Anspruch 7.

Das erfindungsgemäße Steuerverfahren umfasst die folgenden Schritte:
- Bereitstellen einer erfindungsgemäßen intelligenten Sicherheitsarmatur,
- Erfassen eines ersten Messwertsatze des Messmediums durch die erste Sensorbaugruppe,
- Vergleichen des ersten Messwertsatzes mit einem ersten Grenzwertsatz durch die Steuereinheit,
- Schließen der ersten Schließeinheit durch die Stelleinheit, wenn der erste Messwertsatz den ersten Grenzwertsatz überschritten hat.

Gemäß einer Ausführungsform der Erfindung umfasst das Steuerverfahren nach dem Schritt des Schließens der ersten Schließeinheit zusätzlich folgende Schritte:
- Empfangen eines Initiierungssignals von der Steuereinheit,
- Öffnen der ersten Schließeinheit, wobei die erste Schließeinheit nur teilweise geöffnet wird,
- Erfassen eines sekundären Messwertsatzes des Messmediums durch die erste Sensorbaugruppe,
- Vergleichen des sekundären Messwertsatzes mit dem ersten Grenzwertsatz durch die Steuereinheit,
- Vollständiges Öffnen der ersten Schließeinheit, wenn der sekundäre Messwertsatz den ersten Grenzwertsatz nicht überschreitet.

Gemäß einer Ausführungsform der Erfindung weist die intelligente Sicherheitsarmatur einen zweiten Armatureingang auf, wobei die erste Schließeinheit dazu geeignet ist, den ersten Armatureingang und den zweiten Armatureingang unabhängig voneinander zu verschließen, wobei das Armaturgehäuse ein zweites Sensorkompartment aufweist und eine zweite Sensorbaugruppe in dem zweiten Sensorkompartment angeordnet ist, wobei das erste Sensorkompartment bei dem Armaturausgang angeordnet ist und das zweite Sensorkompartment bei dem ersten Armatureingang oder dem zweiten Armatureingang angeordnet ist, wobei das Steuerverfahren des Weiteren folgende Schritte umfasst:
- Erfassen eines zweiten Messwertsatzes des Messmediums durch die zweite Sensorbaugruppe,
- Auswerten des zweiten Messwertsatzes durch die Steuereinheit,
- Schließen oder Öffnen der ersten Schließeinheit durch die Stelleinheit abhängig von der Auswertung des zweiten Messwertsatzes.

Gemäß einer Ausführungsform der Erfindung ist an den zweiten Armatureingang eine Fluidleitung angeschlossen, welche ein Additionsmedium transportiert, wobei das Additionsmedium dazu geeignet ist, das Messmedium derart zu verändern, dass zumindest eine Messgröße des Messmediums durch das Additionsmedium eingestellt werden kann, wobei der Schritt des Auswertens des zweiten Messwertsatzes einen Schritt des Vergleichens des zweiten Messwertsatzes mit einem Sollwertsatz umfasst und einen Schritt des Schließens oder des Öffnens der ersten Schließeinheit derart umfasst, dass ausgehend vom zweiten Messwertsatz der Sollwertsatz angenähert wird.

Gemäß einer Ausführungsform der Erfindung weist die intelligente Sicherheitsarmatur ein Kommunikationsmodul auf. Das Steuerverfahren umfasst einen Schritt des Ausgebens eines Alarmsignals, wenn der erste Messwertsatz den ersten Grenzwertsatz überschritten hat.

Gemäß einer Ausführungsform der Erfindung weist die intelligente Sicherheitsarmatur ein Kommunikationsmodul und einen Verschlussschalter auf. Der Verschlussschalter ist dazu geeignet, zu erkennen, ob die erste Schließeinheit verschlossen ist. Das Steuerverfahren umfasst einen Schritt des Ausgebens eines Alarmsignals, wenn der erste Messwertsatz den ersten Grenzwert überschritten hat und der Verschlussschalter erkennt, dass die erste Schließeinheit nicht geschlossen ist.

Die Erfindung wird anhand der nachfolgenden Figurenbeschreibung näher erläutert. Es zeigen:
- Fig. 1: eine schematische Darstellung einer erfindungsgemäßen intelligenten Sicherheitsarmatur,
- Fig. 2: eine schematische Darstellung einer Ausführungsform der in Fig. 1 gezeigten intelligenten Sicherheitsarmatur,
- Fig. 3: eine schematische Darstellung einer weiteren Ausführungsform der in Fig. 1 gezeigten intelligenten Sicherheitsarmatur.

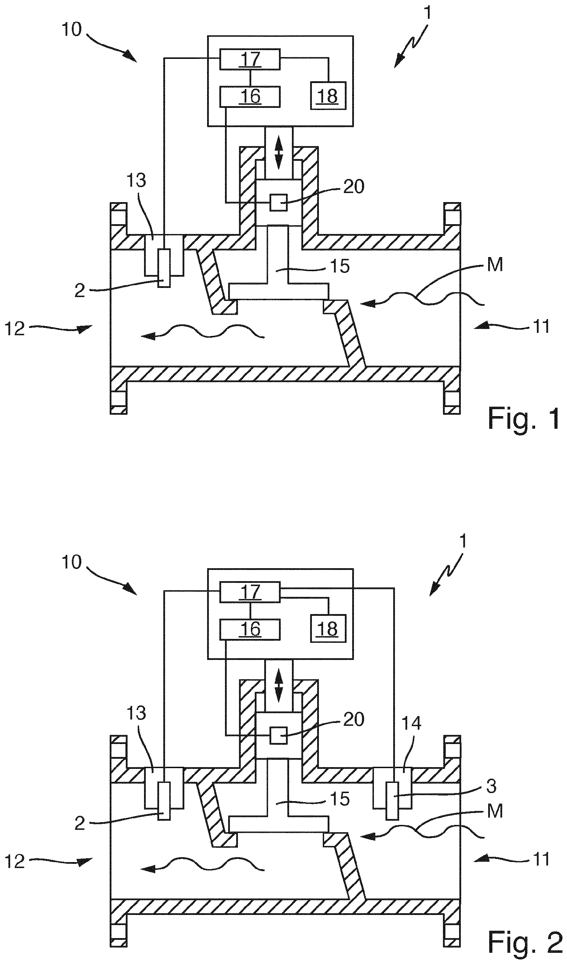

Figur 1 zeigt eine Ausführungsform einer intelligenten Sicherheitsarmatur 1, welche ein Armaturgehäuse 10, eine erste Schließeinheit 15, eine Stelleinheit 16, eine Steuereinheit 17, ein Kommunikationsmodul 18 und einen Verschlussschalter 20 umfasst. Die intelligente Sicherheitsarmatur 1 ist dazu geeignet, von einem Messmedium M durchströmt zu werden. Die intelligente Sicherheitsarmatur 1 ist dazu geeignet, durch ein Verbindungselement 5, zum Beispiel einem Flansch mit einem Behälter, zum Beispiel einer Rohrleitung, verbunden zu werden.

Das Armaturgehäuse 10 weist einen ersten Armatureingang 11, einen Armaturausgang 12 und ein erstes Sensorkompartment 13 auf. Das erste Sensorkompartment 13 ist im Armaturgehäuse 10 angeordnet und ist dazu geeignet, eine erste Sensorbaugruppe 2 zu beinhalten. Das Armaturgehäuse 10 ermöglicht der ersten Sensorbaugruppe 2 in Kontakt mit einem Messmedium im Inneren des Armaturgehäuses 10 zu kommen. Das erste Sensorkompartment 13 ist vorzugsweise in der Nähe des Armaturausgangs 12 angeordnet. Selbstredend könnte das erste Sensorkompartment 13 auch am ersten Armatureingang 11 angeordnet sein.

Die erste Sensorbaugruppe 2 umfasst mindestens einen Analysesensor. Die erste Sensorbaugruppe 2 kann auch mehrere Analysesensoren umfassen. Der Analysesensor ist beispielsweise ein pH-Sensor, ein Leitfähigkeitssensor oder ein Sauerstoffsensor. Der Analysensensor ist zum Beispiel ein optischer Sensor. Der Analysensensor ist beispielsweise ein Trübungssensor oder ein Absorptionssensor. Wenn der Analysensensor ein pH-Sensor ist, umfasst dieser vorzugsweise ein ionensensitives Element, welches auf einem Substrat angebracht ist. Das Substrat umfasst vorzugsweise Email, Keramik, Kunststoff oder Metall.

Die erste Schließeinheit 15 ist dazu geeignet, die intelligente Sicherheitsarmatur 1 zu verschließen. Die erste Schließeinheit 15 ist dazu geeignet, die intelligente Sicherheitsarmatur 1 zum Beispiel vollständig zu verschließen, so dass kein Messmedium vom Armatureingang 11 zum Armaturausgang 12 fließen kann. Alternativ hierzu ist die erste Schließeinheit 15 auch dazu geeignet, die intelligente Sicherheitsarmatur 1 teilweise zu verschließen. Auf die Funktionsweisen der intelligenten Sicherheitsarmatur 1 wird weiter unten im Detail eingegangen. Mittels der ersten Schließeinheit 15 wird somit erreicht Stoffströme zu verändern und zu steuern.

Die erste Schließeinheit 15 ist mit der Stelleinheit 16 mechanisch verbunden. Die Stelleinheit 16 ist dazu geeignet, die erste Schließeinheit 15 zu öffnen und zu schließen, bzw. die erste Schließeinheit 15 teilweise zu öffnen oder teilweise zu schließen.

Die Steuereinheit 17 ist mit der Stelleinheit 16 verbunden und dazu geeignet, die Stelleinheit 16 zu steuern. Die Steuereinheit 17 ist auch mit der ersten Sensorbaugruppe 2 verbunden, um Messwertsätze der ersten Sensorbaugruppe 2 zu empfangen und auszuwerten. Falls die erste Sensorbaugruppe 2 mehrere Sensoren umfasst, ist die Steuereinheit 17 selbstverständlich mit jedem der Sensoren verbunden und ist dazu geeignet, die Messwertsätze der Sensoren gleichzeitig zu verarbeiten.

Des Weiteren ist die Steuereinheit 17 mit dem Kommunikationsmodul 18 verbunden. Das Kommunikationsmodul 18 ermöglicht beispielsweise eine drahtlose Kommunikation mit dem externen System oder dem externen Mobilgerät. Alternativ hierzu kann das Kommunikationsmodul 18 aber auch über eine Feldbus-Schnittstelle oder eine Netzwerk-Schnittstelle mit dem externen System verbunden sein. Das Kommunikationsmodul 18 ermöglicht die Messwertsätze an ein externes System oder ein externes Mobilgerät zu kommunizieren. Durch das Kommunikationsmodul 18 wird des Weiteren ermöglicht, dass zum Beispiel eine aktuelle Position oder eine Historie der vergangenen Positionen der ersten Schließeinheit 15 an einen Benutzer kommuniziert wird, oder dass der Benutzer gewisse Einstellungen an der intelligenten Sicherheitsarmatur 1 vornimmt, zum Beispiel Grenzwertsätze definiert. Auf die Grenzwertsätze wird weiter unten eingegangen.

Figur 2 zeigt eine mit der oben beschriebenen Ausführungsform kompatible weitere Ausführungsform. In dieser weiteren Ausführungsform weist das Armaturgehäuse 10 zusätzlich ein zweites Sensorkompartment 14 auf, in welchem eine zweite Sensorbaugruppe 3 angeordnet ist. Das zweite Sensorkompartment 14 ist vorzugsweise in der Nähe des ersten Armatureingangs 11 angeordnet.

Die zweite Sensorbaugruppe 3 ist mit der Steuereinheit 17 verbunden, um Messwertsätze der zweiten Sensorbaugruppe 3 zu empfangen und auszuwerten.

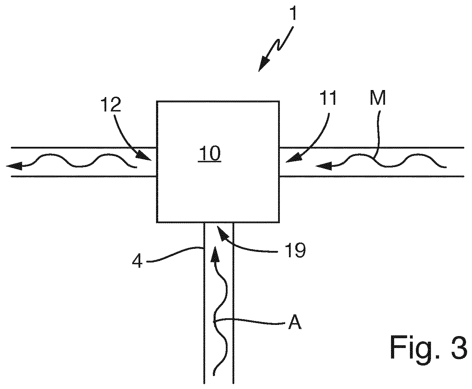

Figur 3 zeigt eine schematische Ansicht einer mit den oben beschriebenen Ausführungsformen kompatiblen weiteren Ausführungsform der intelligenten Sicherheitsarmatur 1. In dieser weiteren Ausführungsform weist das Armaturgehäuse 10 die intelligente Sicherheitsarmatur 1 einen zweiten Armatureingang 19 auf. An den zweite Armatureingang 19 kann zum Beispiel eine weitere Rohrleitung angeschlossen werden, um beispielsweise ein Additionsmedium A dem Messmedium M beizumischen.

Der zweite Armatureingang 19 ist derart angeordnet, dass der zweite Armatureingang 19 dazu geeignet ist, von der ersten Schließeinheit 15 verschlossen bzw. teilweise verschlossen zu werden. Die erste Schließeinheit 15 ist vorzugsweise derart ausgestaltet, dass der erste Armatureingang 11 und der zweite Armatureingang 19 unabhängig voneinander durch die erste Schließeinheit 15 verschlossen werden können. Dies bedeutet, dass ein Volumenstrom des Messmediums M und ein Volumenstrom des Additionsmediums A in einem beliebigen Verhältnis eingestellt werden können. Somit kann eine Gesamtdurchlassöffnung, welche durch den ersten Armatureingang 11 und den zweiten Armatureingang 19 definiert wird, durch die erste Schließeinheit 15 beliebig verschlossen werden.

In einer alternativen (nicht dargestellten) Ausführungsform umfasst die intelligente Sicherheitsarmatur 1 eine zweite Schließeinheit, welche dazu geeignet ist, den zweiten Armatureingang 19 zu verschließen und welche mit der Steuereinheit 17 verbunden ist und dessen Öffnung durch eine weitere Stelleinheit gesteuert wird.

In einer alternativen (nicht dargestellten) Ausführungsform umfasst die erste Schließeinheit 15 die zweite Schließeinheit. Dies bedeutet, dass die erste Schließeinheit 15 zweiteilig aufgebaut ist. Die zweite Schließeinheit ist dazu geeignet, den zweiten Armatureingang 19 zu verschließen.

Figur 1 und Figur 2 zeigen ein Verschlussschalter 20, welcher dazu geeignet ist, die Position der ersten Schließeinheit 15 zu erkennen. Zum Beispiel erkennt der Verschlussschalter 20, ob der erste Schließeinheit 15 den ersten Armatureingang 11 und/oder den zweiten Armatureingang 19 verschließt. Falls eine zweite Schließeinheit verwendet wird, ermöglicht der Verschlussschalter 20 auch die Position der zweiten Schließeinheit zu erkennen.

Im Folgenden wird das Steuerverfahren der intelligenten Sicherheitsarmatur 1 beschrieben.

In einem ersten Schritt wird die oben beschriebene intelligente Sicherheitsarmatur 1 bereitgestellt. Dies bedeutet, dass die intelligente Sicherheitsarmatur 1 einsatzbereit ist, sprich, zum Beispiel in einer Prozessanlage eingebaut ist. Der erste Armatureingang 11 und der Armaturausgang 12 ist zum Beispiel mit einem Tank, einem Reaktor, einem Klärbecken oder einer Rohrleitung verbunden, worin sich das Messmedium M befindet.

Anschließend wird ein erster Messwertsatz des Messmediums M durch die erste Sensorbaugruppe 2 erfasst. Je nach erste Sensorbaugruppe 2 ist der Messwertsatz zum Beispiel ein pH-Wert, ein Leitfähigkeitswert, ein Sauerstoffgehalt oder ein anderer Messwert. Je nach Anzahl der im ersten Sensorkompartment 13 angeordneten Sensoren umfasst der erste Messwertsatz mehrere erste Messwerte.

Dann wird der erste Messwertsatz mit dem ersten Grenzwertsatz durch die Steuereinheit 17 verglichen. Der erste Grenzwertsatz ist in der Steuereinheit 17, zum Beispiel in einem Speicher (nicht dargestellt), hinterlegt und umfasst einen ersten Grenzwert oder mehrere erste Grenzwerte. Der erste Grenzwertsatz kann vom Benutzer, zum Beispiel über das Kommunikationsmodul 18 eingestellt werden.

In einem nächsten Schritt wird die erste Schließeinheit 15 durch die Stelleinheit 16 geschlossen, wenn der erste Messwertsatz den ersten Grenzwertsatz überschritten hat. "Überschritten" ist hier in einem breiteren Sinn zu verstehen. Das bedeutet, dass der erste Grenzwertsatz über oder unterschritten wird. Falls der erste Grenzwertsatz mehrere erste Grenzwerte umfasst und der erste Messwertsatz mehrere erste Messwerte umfasst, aber nur einen ersten Grenzwert durch einen ersten Messwert überschritten wurde, kann die erste Schließeinheit 15 trotzdem geschlossen werden. Zusätzlich kann ein Alarmsignal, zum Beispiel über das Kommunikationsmodul 18 ausgegeben werden.

Anschließend erfolgt ein Schritt des Empfangens eines Initiierungssignals von der Steuereinheit 17. Das Initiierungssignal ist beispielsweise eine Eingabe eines Benutzers über eine mobile Kommunikationseinheit oder ein Leitsystem, welche(s) mit dem Kommunikationsmodul 18 informationstechnisch verbunden ist. Alternativ hierzu kann das Initiierungssignal auch von der Steuereinheit 17 selbst generiert werden.

Nach erfolgreichem Empfangen des Initiierungssignals erfolgt ein Schritt des Öffnens der ersten Schließeinheit 15. Beim Öffnen wird die erste Schließeinheit 15 vorzugsweise nur teilweise geöffnet. Somit kann nur ein geringer Anteil an Messmedium M zum Armaturausgang 12 und zur ersten Sensorbaugruppe 2 vordingen. Vor dem Ausführen des Schritts des Öffnens wird vorzugsweise eine gewisse Zeitspanne abgewartet. So kann zum Beispiel dem Grund für das Überschritten des ersten Grenzwertsatzes nachgegangen werden. Das Öffnen der ersten Schließeinheit 15 erfolgt vorzugsweise für eine vorbestimmte Zeitdauer.

Anschließend wird von der ersten Sensorbaugruppe 2 ein sekundärer Messwertsatz des Messmediums M erfasst. Der sekundäre Messwertsatz kann entsprechend zum ersten Messwertsatz mehrere sekundäre Messwerte aufweisen.

Nachfolgend wird der sekundäre Messwertsatz mit dem ersten Grenzwertsatz durch die Steuereinheit 17 verglichen. Somit wird eine Art Prüfmessung durchgeführt, um zu prüfen, ob das Messmedium M inzwischen Messwertsätze aufweist, welche den ersten Grenzwertsatz nicht überschreiten. Falls das Messmedium M immer noch Messwertsätze aufweist, welche den ersten Grenzwertsatz überschreiten, wird die erste Schließeinheit 15 erneut geschlossen. Falls das Messmedium M Messwertsätze aufweist, welche den ersten Grenzwertsatz nicht mehr überschreiten, wird die erste Schließeinheit 15 geöffnet, vorzugsweise vollständig geöffnet.

In der oben beschriebenen Ausführungsform, in welcher die intelligente Sicherheitsarmatur 1 einen zweiten Armatureingang 19 aufweist, umfasst das Steuerverfahren Weitere optionale Schritte. Diese optionalen Schritte können parallel zu den zuvor beschriebenen Schritten erfolgen. Die optionalen Schritte können auch nach oder vor den zuvor beschriebenen Schritten erfolgen.

In einem optionalen Schritt wird durch die zweite Sensorbaugruppe 3 ein zweiter Messwertsatz des Messmediums M ermittelt. Der zweite Messwertsatz kann entsprechend zum ersten Messwertsatz und zum sekundären Messwertsatz mehrere zweite Messwerte aufweisen.

Anschließend wird der zweite Messwertsatz durch die Steuereinheit 17 ausgewertet. Dann wird, abhängig von der Auswertung des zweiten Messwertsatzes, die erste Schließeinheit 15 durch die Stelleinheit 16 geschlossen oder teilweise geschlossen.

Fig. 3 zeigt, dass an den zweiten Armatureingang 19 eine Fluidleitung 4 angeschlossen ist, welche ein Additionsmedium A transportiert. Vorzugsweise ist das Additionsmedium A dazu geeignet, das Messmedium M derart zu verändern, dass zumindest eine Messgröße des Messmediums M durch das Additionsmedium A eingestellt werden kann. Zum Beispiel eignet sich das Additionsmedium A dazu, den pH-Wert des Messmediums M einzustellen. Zusätzlich oder alternativ dazu eignet sich das Additionsmedium A die Leitfähigkeit und/oder den Sauerstoffgehalt des Messmediums M einzustellen.

Vorzugsweise umfasst der Schritt des Auswertens des zweiten Messwertsatzes einen Schritt des Vergleichens des zweiten Messwertsatzes mit einem Sollwertsatz. Ebenso umfasst der Schritt des Auswertens einen Schritt des Schließens oder des Öffnens der ersten Schließeinheit 15 derart, dass ausgehend vom zweiten Messwertsatz der Sollwertsatz angenähert wird. Dies bedeutet, zum Beispiel dass wenn ein pH-Wert gemessen wird, welcher leicht unterhalb einem pH-Sollwert liegt, die erste Schließeinheit 15 nur geringfügig geschlossen bzw. geöffnet wird, je nach dem, inwiefern das Additionsmedium A das Messmedium M beeinflusst. Wirkt das Additionsmedium A beispielsweise pH-Wert senkend, würde also die erste Schließeinheit 15 geringfügig geschlossen werden. Somit wird ein Regelkreis erzeugt. Durch eine derartige Regelung wird zum Beispiel ein sicherer pH-Wert erreicht.

Wie oben beschrieben, kann die intelligente Sicherheitsarmatur 1 einen Verschlussschalter 20 aufweisen. In diesem Fall umfasst das Steuerverfahren optional einen Schritt des Ausgebens eines Alarmsignals, wenn der erste Messwertsatz den ersten Grenzwert überschritten hat und der Verschlussschalter 20 erkennt, dass die erste Schließeinheit 15 nicht geschlossen ist. Dies ermöglicht, einen Fehlerzustand der intelligenten Sicherheitsarmatur 1 rasch zu erkennen.

### Bezugszeichenliste

- 1: intelligente Sicherheitsarmatur
- 2: erste Sensorbaugruppe
- 3: zweite Sensorbaugruppe
- 4: Fluidleitung

- 10: Armaturgehäuse
- 11: erster Armatureingang
- 12: Armaturausgang
- 13: erstes Sensorkompartment
- 14: zweites Sensorkompartment
- 15: erste Schließeinheit
- 16: Stelleinheit
- 17: Steuereinheit
- 18: Kommunikationsmodul
- 19: zweiter Armatureingang
- 20: Verschlussschalter

- M: Messmedium
- A: Additionsmedium

## Patentansprüche

1. Intelligente Sicherheitsarmatur (1) umfassend:
- ein Armaturgehäuse (10), mit einem ersten Armatureingang (11), einem Armaturausgang (12) und einem ersten Sensorkompartment (13), wobei das erste Sensorkompartment (13) eine erste Sensorbaugruppe (2) beinhaltet, wobei das erste Sensorkompartment (13) im Armaturgehäuse (10) angeordnet ist,
- eine erste Schließeinheit (15), welche dazu geeignet ist, die intelligente Sicherheitsarmatur (1) zu verschließen,
- eine Stelleinheit (16), welche mit der ersten Schließeinheit (15) mechanisch verbunden ist, um die erste Schließeinheit (15) zu verschließen,
- eine Steuereinheit (17), welche mit der Stelleinheit (16) verbunden ist und dazu geeignet ist, die Stelleinheit (16) zu steuern,
wobei die Steuereinheit (17) mit der ersten Sensorbaugruppe (2) verbunden ist, um Messwertsätze der ersten Sensorbaugruppe (2) auszuwerten,
wobei die erste Sensorbaugruppe (2) mindestens einen Analysesensor, beispielsweise einen pH-Sensor, einen Leitfähigkeitssensor, einen Sauerstoffsensor oder einen optischen Sensor umfasst.

2. Intelligente Sicherheitsarmatur (1) gemäß Anspruch 1, wobei die Steuereinheit (17) ein Kommunikationsmodul (18) aufweist und dazu geeignet ist, mit einem zur intelligenten Sicherheitsarmatur (1) externen System zu kommunizieren.

3. Intelligente Sicherheitsarmatur (1) gemäß Anspruch 2, wobei das Kommunikationsmodul (18) eine Feldbus-Schnittstelle, eine Netzwerk-Schnittstelle, oder eine drahtlose Schnittstelle ist.

4. Intelligente Sicherheitsarmatur (1) gemäß einem der vorhergehenden Ansprüche, wobei das Armaturgehäuse (10) einen zweiten Armatureingang (19) aufweist, wobei die erste Schließeinheit (15) dazu geeignet ist, ein vorbestimmtes Verhältnis der Öffnungen zwischen dem ersten Armatureingang (11) und dem zweiten Armatureingang (19) einzustellen.

5. Intelligente Sicherheitsarmatur (1) gemäß einem der Ansprüche 1 bis 4, wobei das Armaturgehäuse (10) ein zweites Sensorkompartment (14) aufweist,
wobei das erste Sensorkompartment (13) bei dem Armaturausgang (12) angeordnet ist und das zweite Sensorkompartment (14) bei dem ersten Armatureingang (11) oder dem zweiten Armatureingang (19) angeordnet ist.

6. Intelligente Sicherheitsarmatur (1) gemäß einem der vorhergehenden Ansprüche, wobei der Analysesensor ein ionensensitives Element aufweist, wobei das ionensensitive Element auf einem Substrat angebracht ist, wobei das Substrat vorzugsweise Email, Keramik, Kunststoff oder Metall umfasst.

7. Steuerverfahren einer intelligenten Sicherheitsarmatur (1) umfassend die folgenden Schritte:
- Bereitstellen einer intelligenten Sicherheitsarmatur (1) gemäß einem der Ansprüche 1 bis 6,
- Erfassen eines ersten Messwertsatze des Messmediums durch die erste Sensorbaugruppe (2),
- Vergleichen des ersten Messwertsatzes mit einem ersten Grenzwertsatz durch die Steuereinheit (17),
- Schließen der ersten Schließeinheit (15) durch die Stelleinheit (16), wenn der erste Messwertsatz den ersten Grenzwertsatz überschritten hat.

8. Steuerverfahren gemäß Anspruch 7, wobei das Steuerverfahren nach dem Schritt des Schließens der ersten Schließeinheit (15) zusätzlich folgende Schritte umfasst:
- Empfangen eines Initiierungssignals von der Steuereinheit (17),
- Öffnen der ersten Schließeinheit (15), wobei die erste Schließeinheit (15) nur teilweise geöffnet wird,
- Erfassen eines sekundären Messwertsatzes des Messmediums durch die erste Sensorbaugruppe (2),
- Vergleichen des sekundären Messwertsatzes mit dem ersten Grenzwertsatz durch die Steuereinheit (17),
- Vollständiges Öffnen der ersten Schließeinheit (15), wenn der sekundäre Messwertsatz den ersten Grenzwertsatz nicht überschreitet.

9. Steuerverfahren gemäß Anspruch 7 oder 8, wobei die intelligente Sicherheitsarmatur (1) einen zweiten Armatureingang (19) aufweist, wobei die erste Schließeinheit (15) dazu geeignet ist, den ersten Armatureingang (11) und den zweiten Armatureingang (19) unabhängig voneinander zu verschließen,
wobei das Armaturgehäuse (10) ein zweites Sensorkompartment (14) aufweist und eine zweite Sensorbaugruppe (3) in dem zweiten Sensorkompartment (14) angeordnet ist, wobei das erste Sensorkompartment (13) bei dem Armaturausgang (12) angeordnet ist und das zweite Sensorkompartment (14) bei dem ersten Armatureingang (11) oder dem zweiten Armatureingang (19) angeordnet ist,
wobei das Steuerverfahren des Weiteren folgende Schritte umfasst:
- Erfassen eines zweiten Messwertsatzes des Messmediums durch die zweite Sensorbaugruppe (3),
- Auswerten des zweiten Messwertsatzes durch die Steuereinheit (17),
- Schließen oder Öffnen der ersten Schließeinheit (15) durch die Stelleinheit (16) abhängig von der Auswertung des zweiten Messwertsatzes.

10. Steuerverfahren gemäß Anspruch 9, wobei an den zweiten Armatureingang (19) eine Fluidleitung (4) angeschlossen ist, welche ein Additionsmedium (A) transportiert, wobei das Additionsmedium (A) dazu geeignet ist, das Messmedium (M) derart zu verändern, dass zumindest eine Messgröße des Messmediums (M) durch das Additionsmedium (A) eingestellt werden kann,
wobei der Schritt des Auswertens des zweiten Messwertsatzes einen Schritt des Vergleichens des zweiten Messwertsatzes mit einem Sollwertsatz umfasst und einen Schritt des Schließens oder des Öffnens der ersten Schließeinheit (15) derart umfasst, dass ausgehend vom zweiten Messwertsatz der Sollwertsatz angenähert wird.

11. Steuerverfahren gemäß einem der Ansprüche 7 bis 8, wobei die intelligente Sicherheitsarmatur (1) ein Kommunikationsmodul (18) aufweist, wobei das Steuerverfahren einen Schritt des Ausgebens eines Alarmsignals umfasst, wenn der erste Messwertsatz den ersten Grenzwertsatz überschritten hat.

12. Steuerverfahren gemäß einem der Ansprüche 7 bis 11, wobei die intelligente Sicherheitsarmatur (1) ein Kommunikationsmodul (18) und einen Verschlussschalter (20) aufweist, wobei der Verschlussschalter (20) dazu geeignet ist, zu erkennen, ob die erste Schließeinheit (15) verschlossen ist,
wobei das Steuerverfahren einen Schritt des Ausgebens eines Alarmsignals umfasst, wenn der erste Messwertsatz den ersten Grenzwert überschritten hat und der Verschlussschalter (20) erkennt, dass die erste Schließeinheit (15) nicht geschlossen ist.
